# EUROPEAN PATENT SPECIFICATION

(11) **EP 1 428 117 B1**
(45) Date of publication and mention of the grant of the patent: **06.12.2006**
(21) Application number: 01981672.7
(22) Date of filing: 17.10.2001
(51) Int. Cl.: G06F 9/46, G06F 9/44, H04L 29/08

(54) **METHOD AND APPARATUS FOR ORGANIZING ELEMENTS OF A SERVER APPLICATION IN A CLIENT-SERVER SYSTEM**
VERFAHREN UND VORRICHTUNG ZUR ELEMENTENORGANISATION EINER SERVERAPPLIKATION IN EINEM CLIENT-SERVER SYSTEM
PROCEDE ET UN APPAREIL DESTINES A ORGANISER DES ELEMENTS D'UNE APPLICATION SERVEUR DANS UN SYSTE ME CLIENT-SERVEUR

(30) Priority: 17.10.2000 US 691407
(43) Date of publication of application: 16.06.2004
(73) Proprietor: SUN MICROSYSTEMS, INC., Palo Alto, California 94303 (US)
(72) Inventor: DEUTSCH, Keith, Palo Alto, CA 94303 (US); SHAH, Pallavi, Mountain View, CA 94043 (US); FERNANDO, Gerardo, Mountain View, CA 94040 (US)
(74) Representative: Davies, Simon Robert
(86) International application number: PCT/US2001/032356
(87) International publication number: WO 2002/033546

(56) References cited:
- US-A- 6 006 280
- US-A- 6 115 549
- US-A- 6 115 646

## Description

### BACKGROUND OF THE INVENTION

### 1. FIELD OF THE INVENTION

This invention relates to the field of computer applications, and, more specifically, to object-oriented client-server applications.

Sun, Sun Microsystems, the Sun logo, Java, Java 3D and all Java-based trademarks and logos are trademarks or registered trademarks of Sun Microsystems, Inc. in the United States and other countries. All SPARC trademarks are used under license and are trademarks of SPARC International, Inc. in the United States and other countries. Products bearing SPARC trademarks are based upon an architecture developed by Sun Microsystems, Inc.

### 2. BACKGROUND ART

In monolithically designed object-oriented computer applications, program code is developed as a collection of objects linked as an "object web." Each object encapsulates its own data, as well as methods for operating on that data. In the execution of the application, messages are sent between objects, calling the various methods to implement the application. However, more and more frequently, applications are being designed as distributed in nature. That is, elements of the application may exist in separate execution environments, sometimes resident within the same computer system, but more often executed in multiple computer systems coupled via a network. An example of such a distributed scheme is the client-server paradigm. Unfortunately, as described below, it is difficult for monolithic distributed applications to provide efficient communication between the distributed elements of the application.

In a client-server application, the functionality of the application is split between two primary locations, i.e., the "client" and the "server." In many cases, the same server will interface with multiple clients, e.g., for common access to a database or shared services. In this type of environment, for a monolithically designed application, communication is generalized into simple client-server messages transmitted over a common communication channel.

Typically, one communication object or component of the client receives all outgoing message requests from the application objects local to the client. Those outgoing message requests are packaged (e.g., as a network packet) and sent via the common channel to the server. At the server, another communication object receives the packaged message. The communication object, or other server resident object, must then determine what the message is regarding (i.e., what is the message context) and which object on the server should handle the message. It is possible that the message will be processed in this manner by multiple objects before being forwarded to the desired target object on the server. The same communication procedure is repeated over the common communication channel for communications originating from the server for processing by the client.

The process of determining the message context and identifying the appropriate target object can be non-trivial, particularly for large applications. Because the application is monolithic in nature, it may not be obvious which object should handle a message having a particular context. Extra effort may be needed to predetermine what sort of message contexts each object can handle, and organize this predetermined information into a useful format. The application structure must then remain fixed in order for this predetermined information to remain valid. Constraining the application to a static configuration in this way undesirably eliminates any dynamic flexibility in the application, making improvements and alterations to the application more complicated. Efforts are thus needed to improve the efficiency of communication in distributed applications without constraining the flexibility of those applications.

Efforts in the organization of applications include the development of hierarchical tools referred to as "scenegraphs," which are used to organize rendering applications as directed acyclic graphs. A description of scenegraph techniques is provided below.

### Scenegraph Techniques

A scenegraph is a tree structure comprising a multiplicity of nodes interconnected in a hierarchical manner. This hierarchical structure provides a well-organized framework for software applications, and one in which functionality may be easily augmented through the addition of one or more nodes to an existing scenegraph. Individual functional application elements are constructed as separate node objects and connected together in a treelike structure. Those node objects are then manipulated using their predefined accessor, mutator and node-linking methods.

For reference, an object is a programming unit that groups together a data structure (one or more instance variables) and the operations (methods) that can use or affect that data. Thus, an object consists of data and one or more operations or procedures that can be performed on that data. An object can be instructed to perform one of its methods when it receives a "message." A message is a command or instruction sent to the object to execute a certain method. A message consists of a method selection (e.g., method name) and zero or more arguments. A message tells the receiving object what operations to perform.

Any given object is an "instance" of a particular class. A class provides a definition for an object which typically includes both fields (e.g., variables) and methods. (The term "object" by itself is often used interchangeably to refer to a particular class or a particular instance.) An instance of a class includes the variables and methods defined for that class. Multiple instances can be created from the same class.

In the construction of a scenegraph, a child node object is attached to a parent group node object by calling the "addChild" method of the parent node object and specifying the child node object in the input field. A reference to the child node object is then stored in the parent node object, enabling general scenegraph mechanisms, such as traversal methods, to be implemented between the parent and child node objects. Other specific mechanisms for linking child nodes may be implemented for specific node object types. Also, constraints may be placed on what types of node objects may be linked as children to other specific node types to enforce particular nodal relationships of scenegraph implementations.

Scenegraphs are currently used in graphics rendering applications. The scenegraph contains a complete description of the entire scene, or virtual universe. This includes the geometric data, the attribute information, and the viewing information needed to render the scene from a particular point of view. In the case of a 3D scene, the scenegraph hierarchy promotes a spatial grouping of geometric objects found at the leaves (i.e., end nodes) of the scenegraph. Internal nodes act to group their children together. A group node may also define a spatial bound that contains all the geometry defined by its descendants. Spatial grouping allows for efficient implementation of operations such as proximity detection, collision detection, view frustrum culling and occlusion culling.

Node objects of a scenegraph may be separated into "group node" objects and "leaf node" objects. Group node objects group together one or more child nodes, and can be used to define behavior or relationships common to those child nodes. A leaf node has no children and only one parent. The state of a leaf node includes any state in a direct path between the leaf node and the source or "root" node of the scenegraph. In the context of a graphics scene, leaf node objects contain the actual definitions of shapes (geometry), lights, fog, sound, etc. When a scene is rendered, the renderer incorporates all state changes made in a direct path from the root node of the scenegraph to a leaf node object in the drawing of that leaf node object.

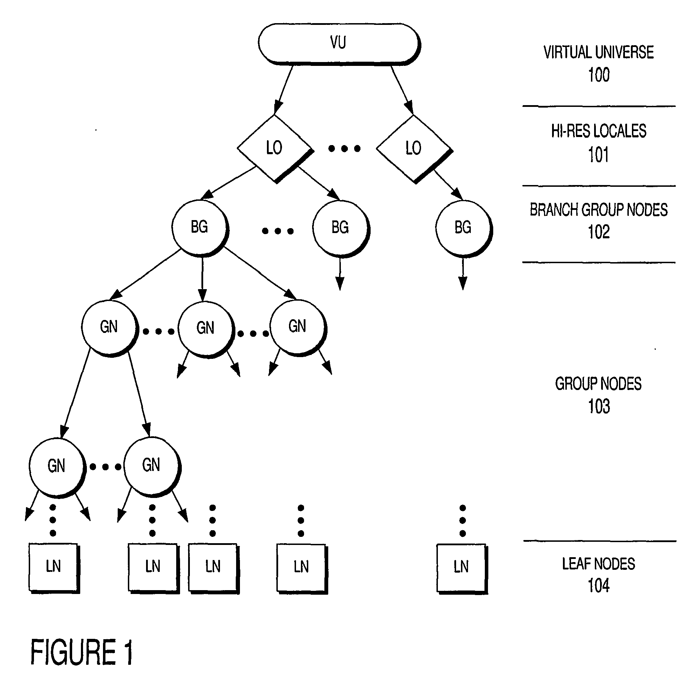

Figure 1 illustrates a general scenegraph structure used to represent a 3D scene in accordance, for example, with scenegraph policies as described in the Java 3D^{™} API Specification available from Sun Microsystems, Inc. The scenegraph of Figure 1 comprises a single root node, referred to as virtual universe (VU) 100, one or more locale nodes (LO) 101, one or more branch group nodes (BG) 102, one or more group nodes (GN) 103, and one or more leaf nodes (LN) 104.

Virtual universe 100 represents the center of the scene, with all child nodes being positioned relative to it. One or more high-resolution locale nodes 101 are coupled to virtual universe 100. Each such locale node 101 specifies a relative offset position with respect to virtual universe 100. This relative offset is represented in a high-resolution format to accommodate distance relationships comparable to the smallest and largest conceived distances in the real world. Each locale node 101 may be used to attach one or more branch group nodes 102, whose rendering positions are interpreted relative to the given locale node 101.

Branch group nodes 102 generally act as a root node of a subgraph associated with the given parent locale node 101. When a branch group node 102 is attached to a locale node 101, and hence to a virtual universe 100, the branch group node and its descendants are considered "live" (i.e., ready to render) with respect to the scene. One or more general group nodes 103 may be attached as child nodes to each branch group node 102. Each group node 103 may support zero or more child nodes in the form of further group nodes 103 or leaf nodes 104.

An example of an implementation of a group node 103 is as a transform node that contains a transform matrix used to scale, rotate, and position its descendants. Other group nodes implemented as "behavior" nodes may be used to embody algorithms for modifying the transform matrices of specified transform objects. Certain leaf node objects may also have references to component objects (not shown) which specify specific attributes of the given leaf node object (e.g., a shape leaf node may have as associated component objects a geometry component object, specifying a geometric shape of the shape leaf node, and an appearance component object, specifying the appearance of the shape in terms of color, texture, etc.). One leaf node is typically used to represent the viewing platform for rendering purposes, with associated component objects for specifying attributes of the rendering viewpoint, as well as the canvas or screen on which the rendered output is to be displayed.

US 6115549 discloses apparatus that implements directory services of a network to provide data for controlling the distribution of software. The apparatus maintains a data store of inter-related logical entities, and stores a distribution object containing all distribution information associated with a distribution. A client may read information in the distribution object, and pull the software to itself.

US 6115646 discloses a dynamic and generic object-oriented process automation engine that provides workflow management services in a distributed computing environment. A build-time part is used to capture and to store process definitions and to request a process. A run-time part is used to schedule, execute and monitor the requested process. A CORBA bus is use to plug-in software applications needed to execute a process.

### SUMMARY OF THE INVENTION

A method and apparatus as defined in the appended claims can be used to organize elements of a client-server application in a client-server system. Client and server components of an application are organized as complementary hierarchical graphs, such as trees or directed acyclic graphs. One or more nodes in the server graph are linked via a distributed communication interface to the respective peer nodes in each of the client graphs. The server graph comprises server nodes corresponding to the union of all client nodes (i.e. available client nodes), whereas each client graph corresponds to a subset of the related server nodes.

Self-contained object graphs, referred to as actors, may be brought together to form composite object graphs on the client and server. Client-server applications can thus be formed at runtime from collections of actors organized in a hierarchical manner. Each actor is secure with respect to its peers, and a secure interface is provided for remote access and update of actors by respective owners, such as external server actor distributors.

### BRIEF DESCRIPTION OF THE DRAWINGS

Figure 1 is a block diagram of a general embodiment of a scenegraph for representing 3D scenes.
Figure 2 is a block diagram of a hierarchical graph in accordance with an embodiment of the invention.
Figure 3 is a block diagram of an example client-server application comprising complementary graphs of actors, in accordance with an embodiment of the invention.
Figure 4 is a block diagram of a client-server system with external sources in accordance with an embodiment of the invention.
Figure 5 is a block diagram of a source distribution graph architecture in accordance with an embodiment of the invention.
Figure 6 is a block diagram of a processing environment comprising an object-oriented runtime environment capable of providing a suitable software execution environment for an embodiment of the invention.
Figure 7 is a block diagram of one embodiment of a computer system capable of providing a suitable hardware execution environment for an embodiment of the invention.

### DETAILED DESCRIPTION OF THE INVENTION

The invention is a method and apparatus for organizing elements of a server application in a client-server system. In the following description, numerous specific details are set forth to provide a more thorough description of embodiments of the invention. It will be apparent, however, to one skilled in the art, that the invention may be practiced without these specific details. In other instances, well known features have not been described in detail so as not to obscure the invention.

Embodiments of the invention are directed at applications having complementary client and server components that are organized as hierarchical graphs or trees. Example mechanisms for transporting graph information over a network for construction of such an application are described in copending U.S. patent application serial no.551522, entitled "Method and Apparatus for Transport of Scenegraph Information Across a Network," filed on 18 April 2000, and assigned to the present assignee, (now US 6751655, corresponding to European application 01927223.6).

In embodiments of the invention, the server application architecture utilizes object graph organization to reflect the structure of the client and to connect more intimately with the internal nodes of the client. Actors are used as building blocks for applications, where each actor is a self-contained hierarchical graph of objects. More specifically, a server application and one or more associated client applications are organized as complementary hierarchical graphs of actors, where each actor node on the client has a corresponding peer actor node on the server. Those aspects of the application that are server specific are implemented in the server actor node and are referred to as the source actor. The client specific aspects of the application are implemented in the peer actor node of the client and are referred to as the member actor. Communication between the clients and the server is performed between peer nodes so that communication protocol and context are well defined.

Where a hierarchical graph is implemented with actors, the subtrees of nodes within each actor are, in one embodiment, private with respect to one another. Separate secured runtime environments (sometimes referred to as security "sandboxes") may be used to support the execution of object code associated with actor subtrees, thus preventing, for example, one subtree from violating the memory space of another. Object code and data are therefore kept private, except where authorized access is provided by an appropriate interface.

External and often remote applications may be associated with one or more source actors in the client-server system. A distribution manager actor provides a secure interface between an external application and the corresponding source actor(s) in the server. The secure interface comprises mechanisms for attaching the external application to, and detaching from, the source actor(s) in the server, as well as for updating and retrieving data from the source actor(s).

In one embodiment, the hierarchical graph is a directed acyclic graph such as a scenegraph. Nodes of the client and server graphs may include active nodes that function like scenegraph elements (e.g., branch group nodes), but with further control functions. Each active node in the server graph is connected with its peer in the client graph, and may also be connected to other resources, such as an external media source. For example, access control nodes are branch group nodes that determine whether, and under what terms, the subgraph below them in the hierarchy is visible or otherwise accessible to the user. In the course of making this determination, an access control node may interact with databases or other server side resources through the server resident peer node. In general, active nodes concern themselves with the portion of the actor graph at or below their point of attachment. Whereas active nodes on the client typically contain information and functions dedicated solely to that client and its user, active nodes on the server contain information and functions directed at all clients for which a corresponding peer node is implemented.

### Media Application Graph Example

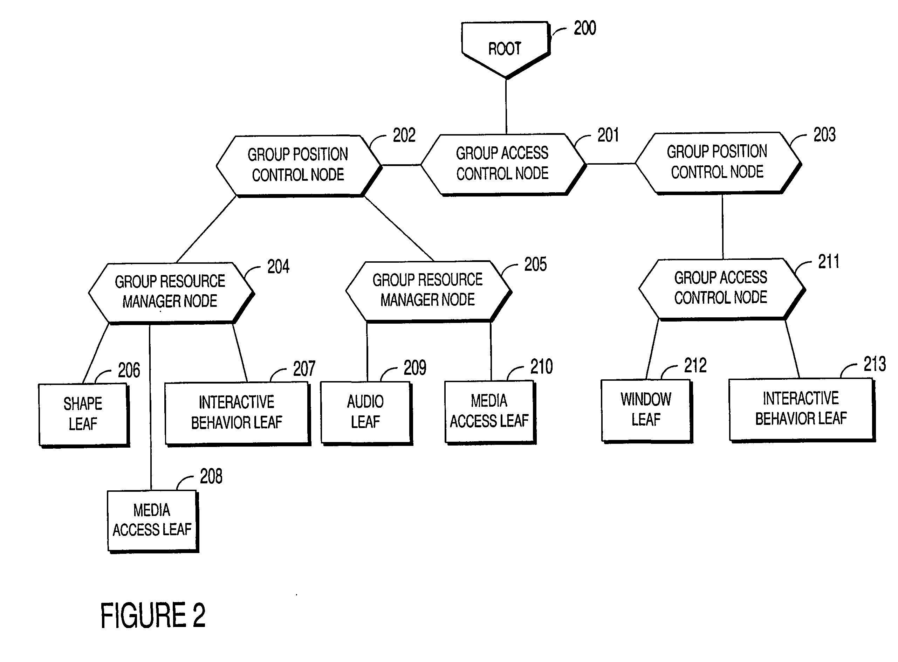

Figure 2 is a block diagram of a hierarchical graph in accordance with an embodiment of the invention. Though described below with respect to media-based application examples, it will be obvious that the techniques described may be similarly applied to any client-server application model. The graph of Figure 2 may represent a complete application from the server or client side, or it may represent a single actor. Each node in the graph may comprise one or more objects. Links between nodes are implemented, for example, with one or more pointers or references to objects within the respective nodes, as well as a defined interface or protocol by which the linked nodes may communicate. One possible mechanism for establishing a link is to call an "addChild()" method as previously described for scenegraphs, though embodiments of the invention are not limited to this mechanism.

Where linked nodes exist in separate runtime environments, an Remote Procedure Call (RPC) such as Java^{™} Remote Method Invocation mechanism or other message transport scheme may be utilized, including transmission of messages as objects (e.g., using the JavaSpaces^{™} technology developed by Sun Microsystems^{™}, Inc.). JavaSpaces technologies provide for an object registration mechanism, through which messages encapsulated within serialized objects may be posted by the client (or server), and accessed and read by the server (or client). Embodiments of the invention may thus take advantage of existing middleware systems for remote communications.

In Figure 2, the hierarchical graph of the application comprises root node 200 linked to group access control node 201, which is in turn linked to group position control nodes 202 and 203. Group position control node 202 is linked to group resource manager nodes 204 and 205. Group resource manager node 204 is linked to shape leaf 206, interactive behavior leaf 207 and media access leaf 208, whereas group resource manager node 205 is linked to audio leaf 209 and media access leaf 210. Group position control node 203 is linked to group access control node 211, which is in turn linked to window leaf 212 and interactive behavior leaf 213. As illustrated, root node 200 represents the highest level or top of the hierarchical graph, with the leaf nodes (e.g., 206-210, 212-213) representing the bottom. Traversal of the tree is initiated from the level of the root node.

Group access control nodes 201 and 211 represent security points in the graph where access to the nodes below the respective access node is permitted only under specified conditions. For example, in a cable programming application, group access node 201 might be used to determine access to general cable programming, such as local network programming, etc. Group access node 211 might then be used to determine access to more privileged programming, such as pay-per-view or premium channels. Access to the underlying nodes is permitted only for those clients that satisfy the access conditions for the access node. With this configuration, to access nodes 202-210, the conditions of access node 201 must be satisfied, whereas to access nodes 211-213, the conditions for both access nodes 201 and 211 must be satisfied. Thus, various levels of secured access may be implemented.

In one possible embodiment, the server portions of group access nodes 201 and 211 contain the conditions under which respective access is granted to the underlying nodes, whereas each corresponding client portion contains the necessary information or input mechanism for satisfying the condition. In this case, the server portion might contain a list of client identifiers specifying those clients for which a general cable access account has been granted (node 201) or for which premium access has been approved (node 211). The client portion might contain the client identifier for matching with the server's list (node 201 and 211), or in the case of pay-per-view, client code for providing a user interface to enter password and credit card information (node 211).

Group position control nodes 202 and 203 comprise objects for managing the base position of media entities (e.g., windows, 2D or 3D objects, avatars, etc.) whose characteristics are embodied in the underlying nodes. Any further underlying positioning activities or position control nodes would be referenced to the position (e.g., in 3D space) specified by the higher level group position control node. At the server side, a position control node might be configured with a positioning program specifying time-based position updates that are transmitted to the client side position control node for modifying a display rendering operation, or it might be configured with methods for responding to position control signals transmitted from the client side in response to user input, for example.

Group resource manager nodes 204 and 205 provide common points from which the underlying media leaf nodes are linked. Nodes 204 and 205 may implement media functions related to the underlying nodes, or nodes 204 and 205 may simply provide basic graph traversal functions.

Leaf nodes 206-210 and 212-213 represent the bottom tier of the application graph. For the described example of a media application, shape leaf node 206 specifies the geometric shape of the media element associated with the parent group manager node 204. Media access leaf 208 (and leaf 210 as well) contains objects, for example, to provide input or output of media such as streaming video. Interactive behavior leaf 207 (and similarly with leaf node 213) encapsulates objects for interfacing with the user and responding to user input with respect to the media element(s) associated with node 204. Audio leaf 209 encapsulates objects for managing input and/or output of audio content in the context of parent node 205. Window leaf 212 similarly encapsulates objects for managing a window element within the context of parent node 211.

As illustrated above, hierarchical organization of application elements or "actors" provides a clear context for each actor based on respective location in the tree. It is also possible to expand applications by the addition of nodes or subtrees to the graph at appropriate connection nodes, based on the desired context of the subtree. Because the context is established by location in the tree, nodes may be added at any time, including at run time, without disturbing the current nodes, and without requiring a separate determination of a new context for the added node(s). In embodiments of the invention, the contextual benefits of a hierarchical organization are further applied to client-server construction and communication.

### Complementary Server and Client Graphs

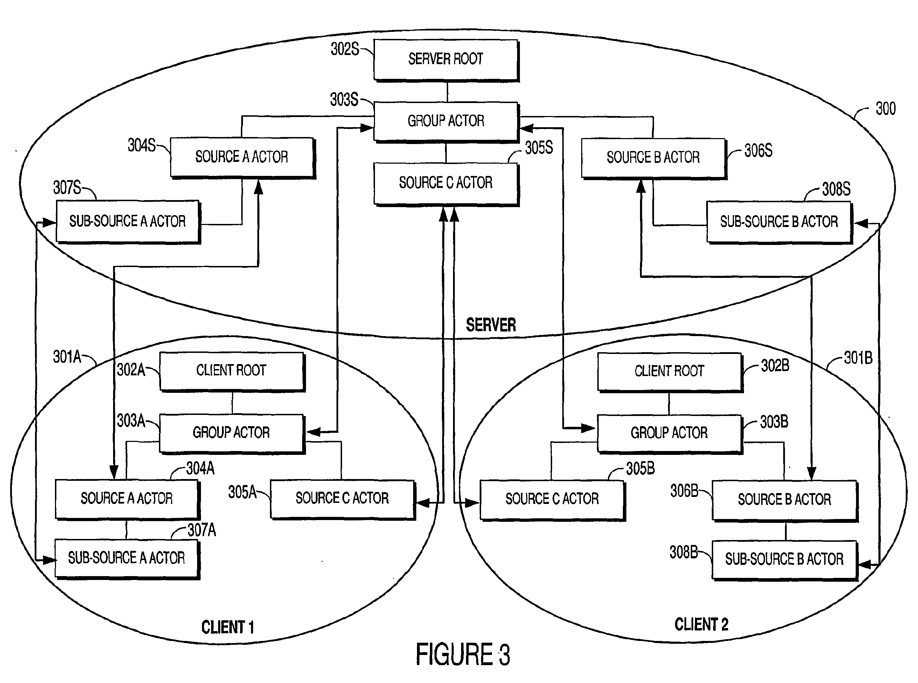

Figure 3 is a block diagram of an example client-server application comprising complementary graphs of actors, in accordance with one or more embodiments of the invention. The application comprises server component 300 and one or more client components (e.g., 301A and 301B). The server and client components each comprise a hierarchical graph of actors, with each client component being complementary to a subtree of the server component.

In Figure 3, server component 300 comprises server root node 302S linked to group actor 303S. Group actor 303S acts as the group resource node from which the primary media sources of this example (i.e., source A actor 304S, source C actor 305S and source B actor 306S) are linked. Source A actor 304S and source B actor 306S are linked to subsource A actor 307S and subsource B actor 308S, respectively.

In this example, client 301A is concerned only with the media provided by source A, subsource A and source C. Actors associated with source B and subsource B are therefore not necessary to the function of client 301A and may be omitted. Otherwise, client 301A mirrors the tree of actors presented by server 300. Client component 301A comprises client root node 302A linked to group actor 303A. Group actor 303A is linked to member A actor 304A and member C actor 305A. Member A actor 304A is further linked to submember A actor 307A. As previously noted, a member actor is the version of the actor component that resides on the client and the source actor is the version of the actor component residing on the server therefore, the tree actors on the client mirror the tree actors on the server.

Unlike client 301A, client 301B is concerned with source B, subsource B and source C, but not with source A or subsource A. Therefore, the actor tree of client component 301B comprises client root node 302B linked to group actor 303B. Group actor 303B is linked to member B actor 306B and member C actor 305B. Member B actor 306B is further linked to submember B actor 308B.

In one embodiment, each actor within a client component is linked with its respective complementary actor in the server component. By distributing the client-server communication interface at the actor level, more directed communication is achieved. There is no need to determine the target object or context for messages transmitted between the client and server. All messages are provided directly to that portion of the object code that is configured to handle the communication. For example, in the described media application, a source actor at the server may be configured to obtain media content, and forward the media content directly to the corresponding actor at the client which is then able to efficiently render the media content. More efficient client-server interaction is thus achieved.

As shown in Figure 3, examples of possible actors may include source and subsource actors. These may include content or media input and/or output elements that obtain content from or submit content to other remote application entities, referred to as "distribution sources" and "distribution subsources," that are linked to the server application component. An example of a distribution source may be a network entity that provides media content such as video or audio data to the server component of a cable programming or pay-per-view application. A distribution subsource may be, for example, a sponsor advertisement source that is associated with the primary source to which it is linked.

### Remote Distribution Sources and Subsources

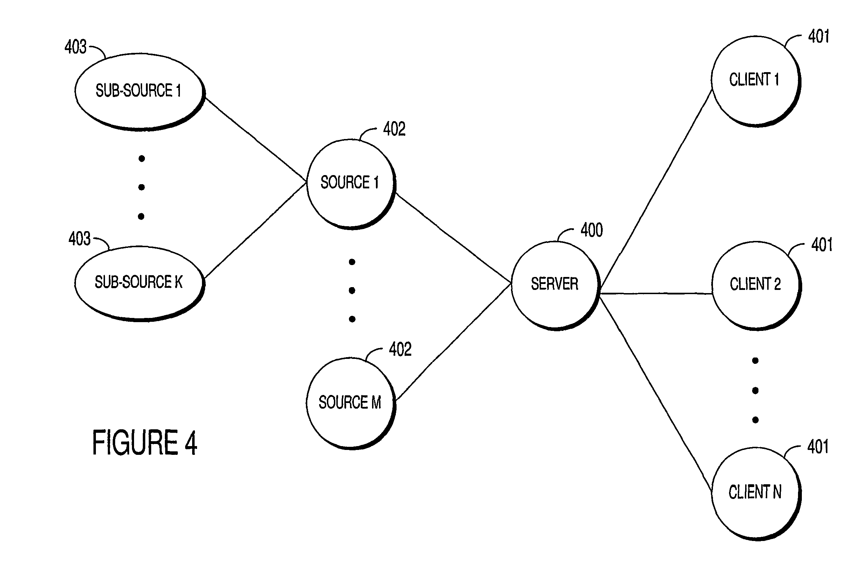

Figure 4 is a block diagram of a client-server environment with distribution sources and subsources in accordance with one or more embodiments of the invention. As shown, a server component 400 is linked to one or more (1-N) client components 401 and one or more (1-M) distribution sources 402. Each distribution source may also be serviced by one or more (1-K) distribution subsources 403 (shown here linked to distribution source 1).

The content provided by each distribution subsource is composited with the content of its respective parent distribution source, so that nested content sourcing may be implemented transparently to the server component 400, as well as any further distribution sources higher in the distribution hierarchy. That is, a parent distribution source is aware of its child distribution subsource, however, for some embodiments, the parent will be unaware of the existence of any "grandchildren" distribution subsources beneath the level of its child subsource.

In one or more embodiments, application security rules and operating boundaries, sometimes referred to as security "sandboxes," are defined at each layer in the distribution source hierarchy such that each parent distribution source/subsource (as well as the server component 400) is prevented from intentionally or unintentionally disturbing the specific content provided from distribution subsources lower in the distribution hierarchy, or from interfering with the operation of the lower distribution sources/subsources. Distribution sources and subsources can therefore be ensured of the quality and accuracy of their respective content when that content is ultimately provided via server component 400 to one or more clients 401.

A complementary mechanism is provided by which the top level distribution source 402 may interact with the corresponding distribution source actor in the server component 400. The same or similar mechanism may be used by distribution subsources to interact with a corresponding actor in a respective parent distribution source.

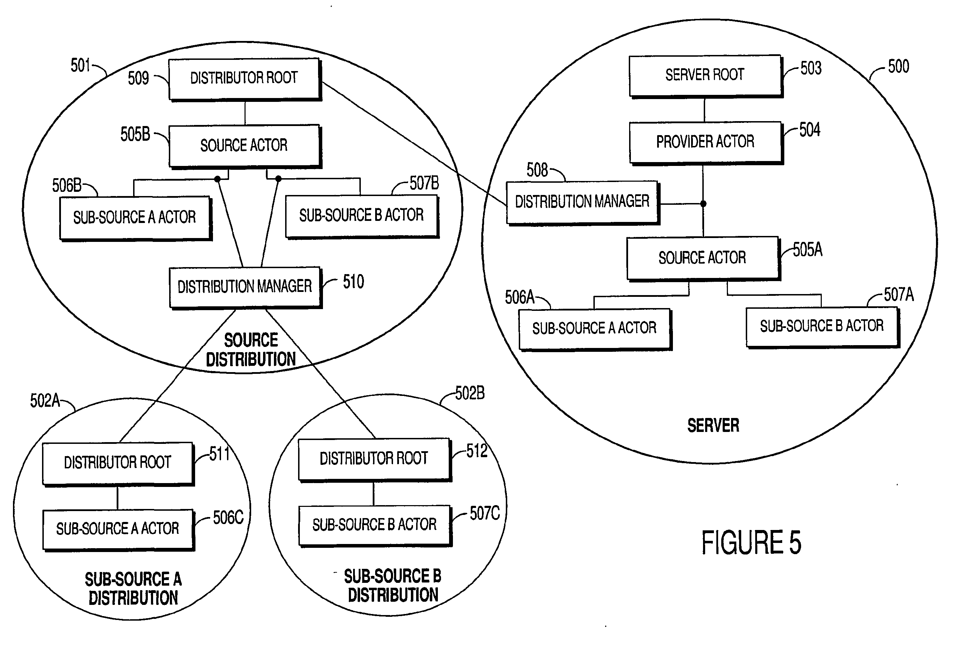

Figure 5 is a block diagram illustrating an example distribution hierarchy utilizing a complementary linking mechanism in accordance with one or more embodiments of the invention. For simplicity of discussion, the server-client application comprises a single provider actor from which the distribution hierarchy is joined to the application. It will be obvious that much more complex applications may be constructed using the same or similar techniques to those illustrated in the example of Figure 5.

In Figure 5, the distribution hierarchy consists of a distribution source 501 linked to a server component 500 and distribution subsources A and B (502A and 502B, respectively). Server component 500 comprises server root node 503 coupled to provider actor 504. Provider actor 504 is coupled to source actor 505A, which is in turn coupled to subsource A actor 506A and subsource B actor 507A. A further actor in the server component tree is distribution manager actor 508, which provides a secure interface to source actor 505A and its children (actors 506A and 507A), and acts as a distribution root node in the subtree of the server-client application which is dedicated to content distributed from primary distribution source 501.

Distribution source 501 comprises a tree of actors corresponding to the distribution subtree in server component 500. Specifically, a distributor root node 509 is linked to source actor 505B, which is in turn linked to subsource A actor 506B and subsource B actor 507B. Distributor root node 509 is also linked to distribution manager actor 508 of server component 500. To act as a distribution root node for the subtrees representing the next layer in the distribution source hierarchy (the bottom layer in this example), and to provide a secure interface to subsource A actor 506B and subsource B actor 507B, a distribution manager actor 510 is present in distribution source 501.

Distribution subsource A (502A) comprises a distributor root node 511 linked to distribution manager actor 510, as well as a subsource A actor 506C linked as a child node to distributor root node 511. Similarly, distribution subsource B (502B) comprises a distributor root node 512 linked to distribution manager actor 510, as well as a subsource B actor 507C linked as a child node to distributor root node 512.

At each level in the distribution chain, a respective distribution manager (e.g., manager 510) is configured to provide a secure interface with mechanisms for attaching and detaching local subsource/source actors (e.g., subsource actor 507B) from the parent tree, as well as facilitating the updating and retrieving of data between the remote subsource/source actor (e.g., subsource B actor 507C) and the corresponding local subsource/source actor (e.g., actor 507B). Thus, in concert with local distribution managers, complementary trees of actors are used within the distribution scheme at each source level to implement media content transmission/updates, as well as providing remote management of the local distribution source actors.

### Embodiment of a Processing Environment

An embodiment of the invention is directed, though not limited, to distributed applications, such as those in which a server application serves one or more client applications. Such systems may be implemented using object-oriented programming environments that produce executable software objects. To facilitate object compatibility between the client and server, the software objects may be implemented in a platform independent manner, or the client and server systems may share common or compatible operating platforms. The clients and server may execute within separate machine or virtual machine runtime environments, within a single runtime environment, or a combination of the foregoing arrangements. The following description refers to an embodiment of a virtual machine-based runtime environment, though it will be obvious that the invention is not limited to such.

Applications typically comprise one or more object classes. Classes written in high-level programming languages, such as the Java^{™} programming language, may be compiled into machine independent bytecode class files. Alternatively, classes may be compiled into machine dependent, executable program code for direct execution by a given hardware platform. In the machine independent case, each class file contains code and data in a platform-independent format called the class file format. The computer system acting as the execution vehicle contains a program called a virtual machine, which is responsible for executing the code in each class file. (A hardware system may also be used that directly executes bytecode of class files.)

In a virtual machine environment, the classes of an application are loaded on demand from the network (stored on a server), or from a local file system, when first referenced during the application's execution. The virtual machine locates and loads each class file, parses the class file format, allocates memory for the class's various components, and links the class with other already loaded classes. This process makes the code in the class readily executable by the virtual machine.

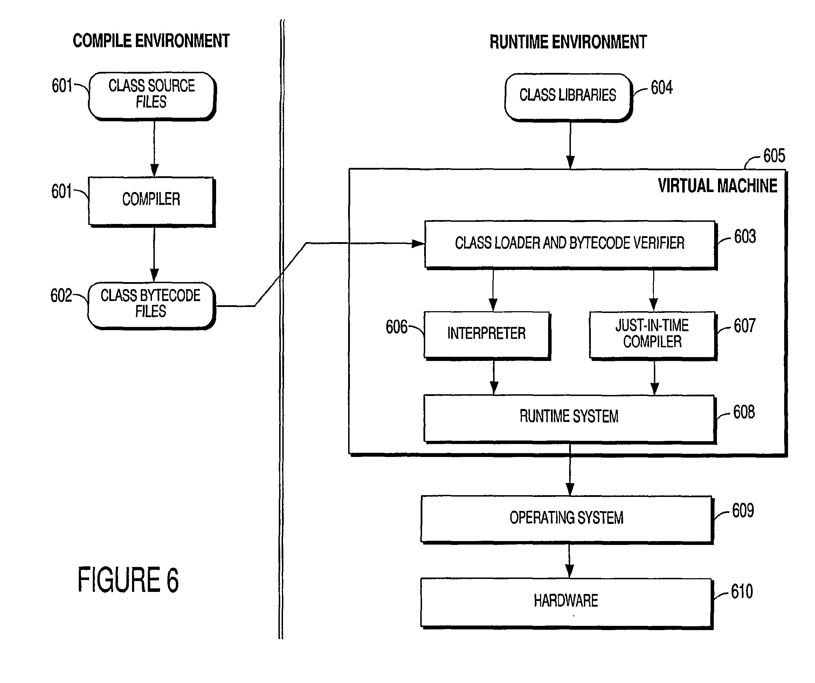

Figure 6 illustrates the compile and runtime environments for an example processing system. In the compile environment, a software developer creates source files 600, which contain the programmer readable class definitions written in the source programming language, including data structures, method implementations and references to other classes. Source files 600 are provided to pre-compiler 601, which compiles source files 600 into ".class" files 602 that contain bytecodes executable by a virtual machine. Bytecode class files 602 are stored (e.g., in temporary or permanent storage) on a server, and are available for download over a network. Alternatively, bytecode class files 602 may be stored locally in a directory on the client platform.

The runtime environment contains a virtual machine (VM) 605 which is able to execute bytecode class files and execute native operating system ("O/S") calls to operating system 609 when necessary during execution. Virtual machine 605 provides a level of abstraction between the machine independence of the bytecode classes and the machine-dependent instruction set of the underlying computer hardware 610, as well as the platform-dependent calls of operating system 609.

Class loader and bytecode verifier ("class loader") 603 is responsible for loading bytecode class files 602 and supporting class libraries 604 into virtual machine 605 as needed. Class loader 603 also verifies the bytecodes of each class file to maintain proper execution and enforcement of security rules. Within the context of runtime system 608, either an interpreter 606 executes the bytecodes directly, or a "just-in-time" (JIT) compiler 607 transforms the bytecodes into machine code, so that they can be executed by the processor (or processors) in hardware 610.

The runtime system 608 of virtual machine 605 supports a general stack architecture. The manner in which this general stack architecture is supported by the underlying hardware 610 is determined by the particular virtual machine implementation, and reflected in the way the bytecodes are interpreted or JIT-compiled. Other elements of the runtime system include thread management (e.g., scheduling) and garbage collection mechanisms.

### Embodiment of Computer Execution Environment (Hardware)

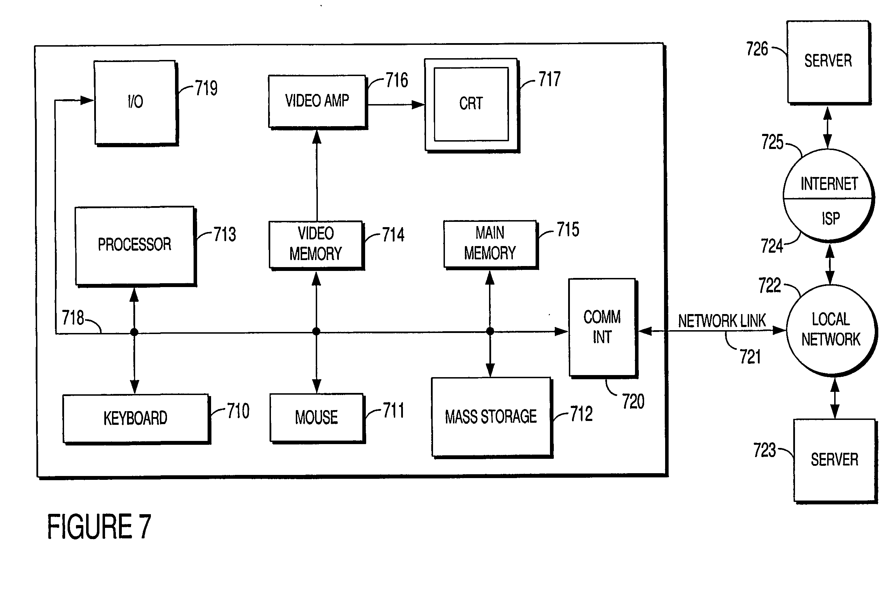

An embodiment of the invention can be implemented as computer software in the form of computer readable code executed on any computer processing platform, or in the form of software (e.g., bytecode class files) that is executable within a runtime environment running on such a processing platform. An embodiment of the invention may be implemented in any type of computer system or programming or processing environment, including embedded devices (e.g., web phones, set-top boxes, etc.) and "thin" client processing environments (e.g., network computers (NC's), etc.). An example of a general computer system is illustrated in Figure 7. The computer system described below is for purposes of example only.

In Figure 7, keyboard 710 and mouse 711 are coupled to a system bus 718. The keyboard and mouse are for introducing user input to the computer system and communicating that user input to processor 713. Other suitable input devices may be used in addition to, or in place of, the mouse 711 and keyboard 710. I/O (input/output) unit 719 coupled to system bus 718 represents such I/O elements as a printer, A/V (audio/video) I/O, etc.

Computer 700 includes a video memory 714, main memory 715 and mass storage 712, all coupled to system bus 718 along with keyboard 710, mouse 711 and processor 713. The mass storage 712 may include both fixed and removable media, such as magnetic, optical or magnetic optical storage systems or any other available mass storage technology. Bus 718 may contain, for example, address lines for addressing video memory 714 or main memory 715. The system bus 718 also includes, for example, a data bus for transferring data between and among the components, such as processor 713, main memory 715, video memory 714 and mass storage 712. Alternatively, multiplexed data/address lines may be used instead of separate data and address lines.

In one embodiment of the invention, the processor 713 is a SPARC^{™} microprocessor from Sun Microsystems, Inc. or a microprocessor manufactured by Intel, such as the 80X86, or Pentium processor, or a microprocessor manufactured by Motorola, such as the 680X0 processor. However, any other suitable microprocessor or microcomputer may be utilized. Main memory 715 is comprised of dynamic random access memory (DRAM). Video memory 714 is a dual-ported video random access memory. One port of the video memory 714 is coupled to video amplifier 716. The video amplifier 716 is used to drive the cathode ray tube (CRT) raster monitor 717. Video amplifier 716 is well known in the art and may be implemented by any suitable apparatus. This circuitry converts pixel data stored in video memory 714 to a raster signal suitable for use by monitor 717. Monitor 717 is a type of monitor suitable for displaying graphic images. Alternatively, the video memory could be used to drive a flat panel or liquid crystal display (LCD), or any other suitable data presentation device.

Computer 700 may also include a communication interface 720 coupled to bus 718. Communication interface 720 provides a two-way data communication coupling via a network link 721 to a local network 722. For example, if communication interface 720 is an integrated services digital network (ISDN) card or a modem, communication interface 720 provides a data communication connection to the corresponding type of telephone line, which comprises part of network link 721. If communication interface 720 is a local area network (LAN) card, communication interface 720 provides a data communication connection via network link 721 to a compatible LAN. Communication interface 720 could also be a cable modem or wireless interface. In any such implementation, communication interface 720 sends and receives electrical, electromagnetic or optical signals which carry digital data streams representing various types of information.

Network link 721 typically provides data communication through one or more networks to other data devices. For example, network link 721 may provide a connection through local network 722 to local server computer 723 or to data equipment operated by an Internet Service Provider (ISP) 724. ISP 724 in turn provides data communication services through the world wide packet data communication network now commonly referred to as the "Internet" 725. Local network 722 and Internet 725 both use electrical, electromagnetic or optical signals which carry digital data streams. The signals through the various networks and the signals on network link 721 and through communication interface 720, which carry the digital data to and from computer 700, are exemplary forms of carrier waves transporting the information.

Computer 700 can send messages and receive data, including program code, through the network(s), network link 721, and communication interface 720. In the Internet example, remote server computer 726 might transmit a requested code for an application program through Internet 725, ISP 724, local network 722 and communication interface 720.

The received code may be executed by processor 713 as it is received, and/or stored in mass storage 712, or other non-volatile storage for later execution. In this manner, computer 700 may obtain application code in the form of a carrier wave. Application code may be embodied in any form of computer program product. A computer program product comprises a medium configured to store or transport computer readable code or data, or in which computer readable code or data may be embedded. Some examples of computer program products are CD-ROM disks, ROM cards, floppy disks, magnetic tapes, computer hard drives, servers on a network, and carrier waves.

Thus, a method and apparatus for organizing elements of a server application in a client-server system have been described in conjunction with one or more specific embodiments. The invention is defined by the claims.

## Claims

1. A method for use in a computer system, said method comprising;
obtaining one or more server actors (303S, 306S, 308S), an actor being a self-contained graph;
linking said server actors in a first hierarchical tree(300);
obtaining one or more client actors (303B, 306B, 308B) corresponding to a subset of said server actors; and
linking said client actors in a second hierarchical tree (301B) that is complementary to a subtree of said first hierarchical tree;
**characterized in that** a server component of a client-server application is formed at runtime from said server actors linked in the first hierarchical tree, and a client component of said client-server application is formed at runtime from said client actors linked in the second hierarchical tree.

2. The method of claim 1, further comprising:
providing a communication interface between each client actor and each corresponding server actor.

3. The method of claim 1, wherein each actor comprises a tree of hierarchically linked nodes, said nodes comprising one or more objects.

4. The method of claim 3, wherein said nodes further comprise one or more nested actors.

5. The method of claim 1, further comprising:
providing an interface between a distribution source and one of said server actors for remote access by said distribution source to a corresponding distribution source actor within said one of said server actors.

6. The method of claim 5, further comprising:
providing a secure runtime environment for said distribution source.

7. The method of claim 5, further comprising:
said distribution source updating said distribution source actor via said interface.

8. The method of claim 5, further comprising:
providing an interface between a distribution subsource and said distribution source for remote access by said distribution subsource to a corresponding distribution subsource actor within said distribution source.

9. A computer program product comprising:
a computer readable medium having computer program code embodied therein for organizing elements of a client-server application, the computer readable medium comprising computer program code configured to cause a computer to:
obtain one or more server actors an actor being a self-contained graph;
link said server actors in a first hierarchical tree;
obtain one or more client actors corresponding to a subset of said server actors: and
link said client actors in a second hierarchical tree that is complementary to a subtree of said first hierarchical tree;
wherein a server component of a client-server application is formed at runtime from said server actors linked in the first hierarchical tree, and a client component of said client-server application is formed at runtime from said client actors linked in the second hierarchical tree.

10. The computer program product of claim 9, wherein said computer program code is further configured to cause a computer to provide a communication interface between each client actor and each corresponding server actor.

11. The computer program product of claim 9, wherein each actor comprises a tree of hierarchically linked nodes, said nodes comprising one or more objects.

12. The computer program product of claim 11, wherein said nodes further comprise one or more nested actors.

13. The computer program product of claim 9, wherein said computer program code is further configured to cause a computer to provide an interface between a distribution source and one of said server actors for remote access by said distribution source to a corresponding distribution source actor within said one of said server actors.

14. The computer program product of claim 13, wherein said computer program code is further configured to cause a computer to provide a secure runtime environment for said distribution source.

15. The computer program product of claim 13, wherein, said computer program code is further configured to cause a computer to enable said distribution source to update said distribution source actor via said interface.

16. The computer program product of claim 13, wherein said computer program code is further configured to cause a computer to provide an interface between a distribution subsource and said distribution source for remote access by said distribution subsource to a corresponding distribution subsource actor within said distribution source.

17. An apparatus comprising:
a server (726) comprising one or more server actors (3035, 306S, 308S) linked in a first hierarchical tree (300);
a client comprising one or more client actors (303B, 306B, 308B) an actor being a self-contained graph linked in a second hierarchical tree, said second hierarchical tree (301B) being complementary to a subset of said first hierarchical tree; and
a communication interface coupled to one or more of said client actors, said communication interface linking each of said one or more of said client actors with a complementary server actor ;
**characterized in that** a server component of a client-server application is formed at runtime from said server actors linked in the first hierarchical tree, and a client component of said client-server application is formed at runtime from said client actors linked in the second hierarchical tree.

18. The apparatus of claim 17, wherein each actor comprises a tree of hierarchically linked nodes, said nodes comprising one or more objects.

19. The apparatus of claim 18, wherein said nodes further comprise one or mo re nested actors.

20. The apparatus of claim 17, wherein one of said server actors comprises a distribution source actor, and wherein said apparatus further comprises a remote distribution source linked to said one of said server actors for access to said distribution source actor.

21. The apparatus of claim 20, wherein said distribution source executes within a secure runtime environment with respect to said server.

22. The apparatus of claim 20, wherein said distribution source is configured to update said distribution source actor.

23. The apparatus of claim 20, wherein said distribution source further comprises a distribution subsource actor, and wherein said apparatus further compnses a remote distribution subsource linked to said distribution source for access to said distribution subsource actor.

24. The apparatus of claim 23, wherein said distribution subsource executes within a secure runtime environment with respect to said distribution source.

25. The apparatus of claim 23, wherein said distribution subsource is configured to update said distribution subsource actor.

26. The apparatus of claim 17, wherein said actors are configured to be linked at runtime.

## Patentansprüche

1. Verfahren zur Verwendung in einem Computersystem, wobei das Verfahren aufweist:
Erhalten von einem oder mehreren Serverdarstellern (303S, 306S, 308S, 308S), wobei ein Darsteller ein unabhängiger Graph ist,
Verbinden der Serverdarsteller in einem ersten hierarchischen Baum (300),
Erhalten von einem oder mehreren Clientdarstellern (303B, 306B, 308B), welche einer Untergruppe der Serverdarsteller entsprechen, und
Verbinden der Clientdarsteller in einem zweiten hierarchischen Baum (301B), der komplementär zu einem Unterbaum des ersten hierarchischen Baumes ist,
**dadurch gekennzeichnet, daß** eine Serverkomponente einer Client-Server-Anwendung während der Laufzeit gebildet wird von den Serverdarstellern, die in dem ersten hierarchischen Baum verbunden sind, und eine Clientkomponente der Client-Server-Anwendung wird während der Laufzeit von den Clientdarstellern, die mit dem zweiten hierarchischen Baum verbunden sind, gebildet.

2. Verfahren nach Anspruch 1, das weiterhin aufweist:
Bereitstellen einer Kommunikationsschnittstelle zwischen jedem Clientdarsteller und jedem entsprechenden Serverdarsteller.

3. Verfahren nach Anspruch 1, bei dem jeder Darsteller einen Baum aus hierarchisch verknüpften Knoten aufweist, wobei die Knoten ein oder mehrere Objekte aufweisen.

4. Verfahren nach Anspruch 3, bei dem die Knoten weiterhin ein oder mehrere geschachtelte Darsteller aufweisen.

5. Verfahren nach Anspruch 1, das weiterhin aufweist:
Bereitstellen einer Schnittstelle zwischen einer Verteilungsquelle und einer der Serverdarsteller für den entfernten Zugriff durch die Verteilungsquellen auf einen entsprechenden Verteilungsquelldarsteller innerhalb des einen Serverdarstellers.

6. Verfahren nach Anspruch 5, das weiterhin aufweist:
Bereitstellen einer sicheren Laufzeitumgebung für die Verteilungsquelle.

7. Verfahren nach Anspruch 5, das weiterhin aufweist:
die Verteilungsquelle aktualisiert den Verteilungsquellendarsteller über die Schnittstelle.

8. Verfahren nach Anspruch 5, das weiterhin aufweist:
Bereitstellen einer Schnittstelle zwischen einer Verteilungsunterquelle und der Verteilungsquelle für den entfernten Zugriff von der Verteilungsunterquelle auf einen entsprechenden Verteilungsunterquellendarsteller innerhalb der Verteilungsquelle.

9. Computerprogrammprodukt, das aufweist:
ein computerlesbares Medium mit einem Computerprogrammcode, der darin verkörpert ist, für das Organisieren von Elementen einer Client-Server-Anwendung, wobei das computerlesbare Medium einen Computerprogrammcode aufweist, der derart konfiguriert ist, daß er veranlaßt, daß ein Computer:
ein oder mehrere Serverdarsteller erhält, wobei ein Darsteller ein unabhängiger Graph ist,
die Serverdarsteller in einem ersten hierarchischen Baum verknüpft,
ein oder mehrere Clientdarsteller entsprechend einer Untergruppe der Serverdarsteller erhält und
die Clientdarsteller in einem zweiten hierarchischen Baum verknüpft, der komplementär zu einem Unterbaum des ersten hierarchischen Baumes ist,
wobei eine Serverkomponente einer Client-Server-Anwendung während der Laufzeit von den Serverdarstellern, die in dem ersten hierarchischen Baum verbunden sind, gebildet wird, und eine Clientkomponente der Client-Server-Anwendung während der Laufzeit von den Clientdarstellern, die mit dem zweiten hierarchischen Baum verknüpft sind, gebildet wird.

10. Computerprogrammprodukt nach Anspruch 9, bei dem der Computerprogrammcode weiterhin konfiguriert ist, um einen Computer dazu zu veranlassen, eine Kommunikationsschnittstelle zwischen jedem Clientdarsteller und jedem entsprechenden Serverdarsteller bereitzustellen.

11. Computerprogrammprodukt nach Anspruch 9, bei dem jeder Darsteller ein Baum von hierarchisch verbundenen Knoten aufweist, wobei die Knoten ein oder mehrere Objekte aufweisen.

12. Computerprogrammprodukt nach Anspruch 11, bei dem die Knoten weiterhin ein oder mehrere verschachtelte Darsteller aufweisen.

13. Computerprogrammprodukt nach Anspruch 9, bei dem der Computerprogrammcode weiterhin konfiguriert ist, um einen Computer dazu zu veranlassen, eine Schnittstelle bereitzustellen zwischen einer Verteilungsquelle und einem der Serverdarsteller für den entfernten Zugriff durch die Verteilungsquelle auf einen entsprechenden Verteilungsquellendarsteller innerhalb des einen Serverdarstellers.

14. Computerprogrammprodukt nach Anspruch 13, bei dem der Computerprogrammcode weiterhin konfiguriert ist, um einen Computer dazu zu veranlassen, eine sichere Laufzeitumgebung für die Verteilungsquelle bereitzustellen.

15. Computerprogrammprodukt nach Anspruch 13, bei dem der Computerprogrammcode weiterhin konfiguriert ist, um einen Computer dazu zu veranlassen, der Verteilungsquelle zu ermöglichen, den Verteilungsquellendarsteller über die Schnittstelle zu aktualisieren.

16. Computerprogrammprodukt nach Anspruch 13, bei dem der Computerprogrammcode weiter konfiguriert ist, um einen Computer dazu zu veranlassen, eine Schnittstelle bereitzustellen zwischen einer Verteilungsunterquelle und der Verteilungsquelle für den entfernten Zugriff durch die Verteilungsunterquelle auf einen entsprechenden Verteilungsunterquellendarsteller innerhalb der Verteilungsquelle.

17. Vorrichtung, die aufweist:
einen Server (726), der ein oder mehrere Serverdarsteller (303S, 306S, 308S), die mit einem ersten hierarchischen Baum (300) verknüpft sind, aufweist,
einen Client, der ein oder mehrere Clientdarsteller (303B, 306B, 308B) aufweist, wobei ein Darsteller ein unabhängiger Graph ist, welche in einem zweiten hierarchischen Baum verknüpft sind, wobei der zweite hierarchische Baum (301B) komplementär zu einer Untergruppe des ersten hierarchischen Baumes ist, und
eine Kommunikationsschnittstelle, die mit einem oder mehreren der Clientdarsteller verbunden ist, wobei die Kommunikationsschnittstelle jeden von dem einen oder der mehreren Clientdarstellern mit einem komplementären Serverdarsteller verbindet,
**dadurch gekennzeichnet, daß** eine Serverkomponente einer Client-Server-Anwendung während der Laufzeit gebildet wird aus den Serverdarstellern, die mit dem ersten hierarchischen Baum verbunden sind, und eine Clientkomponente der Client-Server-Anwendung während der Laufzeit gebildet wird aus den Clientdarstellern, die mit dem zweiten hierarchischen Baum verbunden sind.

18. Vorrichtung nach Anspruch 17, bei der jeder Darsteller einen Baum aus hierarchisch verknüpften Knoten aufweist, wobei die Knoten ein oder mehrere Objekte aufweisen.

19. Vorrichtung nach Anspruch 18, bei der die Knoten weiterhin ein oder mehrere verschachtelte Darsteller aufweisen.

20. Vorrichtung nach Anspruch 17, bei der einer der Serverdarsteller einen Verteilungsquelldarsteller aufweist, und bei der die Vorrichtung weiterhin aufweist eine entfernte Verteilungsquelle, die mit dem einen der Serverdarsteller verbunden ist für den Zugriff auf den Verteilungsquelldarsteller.

21. Vorrichtung nach Anspruch 20, bei der die Verteilungsquelle innerhalb einer sicheren Laufzeitumgebung in Bezug auf den Server ausgeführt wird.

22. Vorrichtung nach Anspruch 20, bei der die Verteilungsquelle konfiguriert ist, so daß sie den Verteilungsquellendarsteller aktualisiert.

23. Vorrichtung nach Anspruch 20, bei der die Verteilungsquelle weiterhin aufweist einen Verteilungsunterquellendarsteller und bei der die Vorrichtung weiterhin aufweist eine entfernte Verteilungsunterquelle, die mit der Verteilungsquelle verbunden ist für den Zugriff auf den Verteilungsunterquellendarsteller.

24. Vorrichtung nach Anspruch 23, bei der die Verteilungsunterquelle innerhalb einer sicheren Laufzeitumgebung in Bezug auf die Verteilungsquelle ausgeführt wird.

25. Vorrichtung nach Anspruch 23, bei der die Verteilungsunterquelle konfiguriert ist, um den Verteilungsunterquellendarsteller zu aktualisieren.

26. Vorrichtung nach Anspruch 17, bei der die Darsteller konfiguriert sind, daß sie während der Laufzeit verknüpft sind.

## Revendications

1. Procédé destiné à être utilisé dans un système informatique, ledit procédé comportant :
l'obtention d'un ou plusieurs acteurs (303S, 306S, 308S) de serveur, un acteur étant un graphe autonome ;
une liaison desdits acteurs de serveur dans un premier arbre (300) hiérarchique ;
l'obtention d'un ou plusieurs acteurs (303B, 306B, 308B) de client correspondant à un sous-ensemble desdits acteurs de serveur ; et
une liaison desdits acteurs de client dans un deuxième arbre (301B) hiérarchique qui est complémentaire à un sous-arbre dudit premier arbre hiérarchique ;
**caractérisé en ce qu'**un composant de serveur d'une application client-serveur est formé au moment de l'exécution à partir desdits acteurs de serveur reliés dans le premier arbre hiérarchique, et qu'un composant de client de ladite application client-serveur est formé au moment de l'exécution à partir desdits acteurs de client reliés dans le deuxième arbre hiérarchique.

2. Procédé selon la revendication 1, comportant de plus :
une fourniture d'une interface de communication entre chaque acteur de client et chaque acteur de serveur correspondant.

3. Procédé selon la revendication 1, dans lequel chaque acteur comporte un arbre de noeuds reliés de façon hiérarchique, lesdits noeuds comportant un ou plusieurs objets.

4. Procédé selon la revendication 3, dans lequel lesdits noeuds comportent de plus un ou plusieurs acteurs imbriqués.

5. Procédé selon la revendication 1, comportant de plus :
fourniture d'une interface entre une source de distribution et l'un desdits acteurs de serveur pour un accès à distance par ladite source de distribution à un acteur de source de distribution correspondant à l'intérieur de l'un desdits acteurs de serveur.

6. Procédé selon la revendication 5, comportant de plus :
fourniture d'un environnement d'exécution sécurisé pour ladite source de distribution.

7. Procédé selon la revendication 5, comportant de plus :
une mise à jour dudit acteur de source de distribution par ladite source de distribution par l'intermédiaire de ladite interface.

8. Procédé selon la revendication 5, comportant de plus : fourniture d'une interface entre une sous-source de distribution et ladite source de distribution pour un accès à distance par ladite sous-source de distribution à un acteur de sous-source de distribution correspondant à l'intérieur de ladite source de distribution.

9. Produit de programme informatique comportant:
un support pouvant être lu par un ordinateur ayant un code de programme informatique incorporé dans celui-ci pour organiser des éléments d'une application client-serveur, le support pouvant être lu par un ordinateur comportant un code de programme informatique configuré pour que l'ordinateur :
obtienne un ou plusieurs acteurs de serveur, un acteur étant un graphe autonome ;
relie lesdits acteurs de serveur dans un premier arbre hiérarchique ;
obtient un ou plusieurs acteurs de client correspondant à un sous-ensemble desdits acteurs de serveur ; et
relie lesdits acteurs de client dans un deuxième arbre hiérarchique qui est complémentaire à un sous-arbre dudit premier arbre hiérarchique ;
dans lequel un composant de serveur d'une application client-serveur est formé au moment de l'exécution à partir desdits acteurs de serveur reliés dans le premier arbre hiérarchique, et un composant de client de ladite application client-serveur est formé au moment de l'exécution à partir desdits acteurs de client reliés dans le deuxième arbre hiérarchique.

10. Produit de programme informatique selon la revendication 9, dans lequel ledit code de programme informatique est, de plus, configuré pour qu'un ordinateur fournisse une interface de communication entre chaque acteur de client et chaque acteur de serveur correspondant.

11. Produit de programme informatique selon la revendication 9, dans lequel chaque acteur comporte un arbre de noeuds reliés de façon hiérarchique, lesdits noeuds comportant un ou plusieurs objets.

12. Produit de programme informatique selon la revendication 11, dans lequel lesdits noeuds comportent, de plus, un ou plusieurs acteurs imbriqués.

13. Produit de programme informatique selon la revendication 9, dans lequel ledit code de programme informatique est, de plus, configuré pour que l'ordinateur fournisse une interface entre une source de distribution et l'un desdits acteurs de serveur pour un accès à distance par ladite source de distribution à un acteur de source de distribution correspondant à l'intérieur de l'un desdits acteurs de serveur.

14. Produit de programme informatique selon la revendication 13, dans lequel ledit code de programme informatique est, de plus, configuré pour qu'un ordinateur fournisse un environnement d'exécution sécurisé pour ladite source de distribution.

15. Produit de programme informatique selon la revendication 13, dans lequel ledit code de programme informatique est, de plus, configuré pour qu'un ordinateur active ladite source de distribution pour mettre à jour ledit acteur de source de distribution par l'intermédiaire de ladite interface.

16. Produit de programme informatique selon la revendication 13, dans lequel ledit code de programme informatique est de plus configuré pour qu'un ordinateur fournisse une interface entre une sous-source de distribution et ladite source de distribution pour un accès à distance par ladite sous-source de distribution à un acteur de sous-source de distribution correspondant à l'intérieur de ladite source de distribution.

17. Dispositif comportant :
un serveur (726) comportant un ou plusieurs acteurs (303S, 306S, 308S) de serveur reliés dans un premier arbre (300) hiérarchique ;
un client comportant un ou plusieurs acteurs (303B, 306B, 308B) de client, un acteur étant un graphe autonome, reliés dans un deuxième arbre hiérarchique, ledit deuxième arbre (301B) hiérarchique étant complémentaire à un sous-ensemble dudit premier arbre hiérarchique ; et
une interface de communication couplée à un ou plusieurs acteurs de client, ladite interface de communication reliant chacun desdits un ou plusieurs acteurs de client avec un acteur de serveur complémentaire ;
**caractérisé en ce qu'**un composant de serveur d'une application client-serveur est formé au moment de l'exécution à partir desdits acteurs de serveur reliés dans le premier arbre hiérarchique, et qu'un composant de client de ladite application client-serveur est formé au moment de l'exécution à partir desdits acteurs de client reliés dans le deuxième arbre hiérarchique.

18. Dispositif selon la revendication 17, dans lequel chaque acteur comporte un arbre de noeuds reliés de façon hiérarchique, lesdits noeuds comportant un ou plusieurs objets.

19. Dispositif selon la revendication 18, dans lequel lesdits noeuds comportent, de plus, un ou plusieurs acteurs imbriqués.

20. Dispositif selon la revendication 17, dans lequel l'un desdits acteurs de serveur comporte un acteur de source de distribution, et où ledit dispositif comporte, de plus, une source de distribution distante reliée audit un desdits acteurs de serveur pour accéder audit acteur de source de distribution.

21. Dispositif selon la revendication 20, dans lequel ladite source de distribution s'exécute à l'intérieur d'un environnement d'exécution sécurisé par rapport audit serveur.

22. Dispositif selon la revendication 20, dans lequel ladite source de distribution est configurée pour mettre à jour ledit acteur de source de distribution.

23. Dispositif selon la revendication 20, dans lequel ladite source de distribution comporte, de plus, un acteur de sous-source de distribution, et où ledit dispositif comporte, de plus, une sous-source de distribution distante reliée à ladite source de distribution pour accéder audit acteur de sous-source de distribution.

24. Dispositif selon la revendication 23, dans lequel ladite sous-source de distribution s'exécute à l'intérieur d'un environnement d'exécution sécurisé par rapport à ladite source de distribution.

25. Dispositif selon la revendication 23, dans lequel ladite sous-source de distribution est configurée pour mettre à jour ledit acteur de sous-source de distribution.

26. Dispositif selon la revendication 17, dans lequel lesdits acteurs sont configurés pour être reliés lors de l'exécution.
